# EUROPÄISCHE PATENTANMELDUNG

(11) **EP 4 345 020 A2**
(43) Veröffentlichungstag der Anmeldung: **03.04.2024**
(21) Anmeldenummer: 24157538.0
(22) Anmeldetag: 03.08.2010
(51) Int. Cl.: B65C 9/06

(54) **VORRICHTUNG ZUM HERSTELLEN VON KUNSTSTOFFFLASCHEN**

(30) Priorität: 07.09.2009 DE 102009040363
(62) Teilanmeldung aus: 22193466.4
(71) Anmelder: KRONES AG, 93073 Neutraubling (DE)
(72) Erfinder: Klenk, Christoph, 93073 Neutraubling (DE); Hausladen, Wolfgang, 93073 Neutraubling (DE)
(74) Vertreter: Grünecker Patent- und Rechtsanwälte PartG mbB

(57) **Zusammenfassung**

Die Erfindung betrifft ein Verfahren und eine Vorrichtung zum Herstellen von Kunststoffflaschen mit einer Blasmaschine, einer Etikettiermaschine und wenigstens einer weiteren Behandlungsmaschine. Erfindungsgemäß ist vorgesehen, dass zum Transport der Flaschen von Maschine zu Maschine Transfersterne vorgesehen und so angeordnet sind, dass die Flaschen ohne Puffer zwischen den wenigstens drei Maschinen transportiert werden.

## Beschreibung

Die Erfindung betrifft eine Vorrichtung und ein Verfahren zum Herstellen von Kunststoffflaschen mit einer Blasmaschine, einer Etikettiermaschine und wenigstens einer weiteren Behandlungsmaschine wie Rinser, Sterilisator, Füller, Verschließer oder dergleichen.

Bei der Herstellung von etikettierten Kunststoffflaschen ist es üblich, zunächst in einer Rotationsblasmaschine kontinuierlich aus Rohlingen Kunststoffflaschen zu erzeugen. Die Blasmaschine nimmt die erwärmten Rohlinge, auch Vorformlinge genannt, in entsprechend ausgebildeten Blasformen auf, in denen Sie dann während des Umlaufs der Blasmaschine unter hohem Druck und mit hoher Temperatur zu Flaschen aufgeblasen werden.

Bei bekannten Verfahren erfolgt im Anschluss an die Blasmaschine entweder das Füllen und anschließend das Etikettieren der Flaschen. Es ist aber auch schon bekannt, die fertig geblasenen Flaschen zunächst zu etikettieren und dann erst zu Füllen.

Im Allgemeinen gibt es zwischen diesen verschiedenen Maschinen längere Transferstrecken, zum Teil auch unter Zwischenschaltung von Puffern, so dass Anlagen dieser Art relativ ausladend ausgebildet sind, d. h. relativ viel Raum benötigen.

Der Erfindung liegt die Aufgabe zugrunde, eine gattungsgemäße Vorrichtung so weiterzubilden, dass sie bei räumlich kompakter und platzsparender Anordnung dennoch flexibel und an verschiedene Aufgaben einfach anpassbare ist sowie ein entsprechendes Verfahren dafür anzugeben.

Hierzu zeichnet sich die erfindungsgemäße Vorrichtung dadurch aus, dass zum Transport der Flaschen von Maschine zu Maschine Sterntransferräder so angeordnet sind, dass die Flaschen ohne Puffer zwischen den wenigstens drei Maschinen transportiert werden. Das Verfahren schützt die entsprechende unmittelbare Behandlung der Flaschen in direkter Abfolge nach Durchlaufen von mittels Transferrädern gebildeten Zwischenförderstrecken. Geeignete Transferräder sind beispielsweise aus WO 2006/087088 A2 (siehe Fig. 9 und 10) bekannt.

Erfindungsgemäß werden die einzelnen Maschinen also über Transfersterne direkt miteinander verbunden, d. h. verblockt. Der Transfer der Behälter zwischen den einzelnen Maschinen erfolgt über diese Sterne, sodass die Maschinen zwar in unmittelbarer Nachbarschaft ohne lange Zwischentransportbänder o.dgl. zueinander stehen können, trotzdem aber im Bereich der Transfersterne quasi Trennstellen zwischen den Maschinen gebildet werden, was eine flexible Anpassung an unterschiedlichste Aufgaben ermöglicht. Ferner können im Bereich der Transfersterne Übergabepunkte zum Ausleiten und/oder Einführen von Behältern vorgesehen sein, um beispielsweise unbrauchbare oder nicht benötigte Behälter auszuleiten oder Lücken aufzufüllen. Insbesondere bei Transferrädern mit selektiv ansteuerbaren Greiforganen ist das problemlos realisierbar. Besonders vorteilhaft sind solche Übergabepunkte im Bereich zwischen einer Blasmaschine und einer der nachfolgenden Maschinen.

In vorteilhafter Ausgestaltung der Erfindung werden zwischen der Blasmaschine und der Etikettiermaschine wenigstens 2 Transfersterne zwischengeschaltet, von denen wenigstens einer zum Teilungsverzug dient. Mit dieser Maßnahme können die Transfersterne somit nicht nur zum Transport von zwischen den miteinander verbundenen Maschinen dienen, sondern sie können als Teilungsverzugsstern ausgebildet sein, z.B. in an sich bekannter Weise als Schwenk- oder Schwenkschiebestern, so dass sie dann die Teilung der Flaschenreihe auf die geforderte Maschinenteilung für die nachfolgende Etikettiermaschine verändern können, bzw. von einer Etikettiermaschine zu einer nachfolgenden Maschine wie Rinser, Füller oder dgl

In weiterer Ausgestaltung der Erfindung ist vorgesehen, dass von den Transfersternen wenigstens einer für Inspektionsaufgaben und/oder zum umfänglichen Ausrichten der Flaschen vorgesehen ist. Mit dieser Maßnahme wird wenigstens ein Transferstern dazu benutzt, in seinem Umfangsbereich Inspektionsmodule anzubauen, so dass die Qualität (Geometriedaten, Fehler- bzw. Beschädigungsfreiheit) der vorgeschalteten Arbeitsschritte überprüft bzw. Mängel am Behälter erkannt werden können, die in den nach- geschalteten Maschinen zu Störungen führen könnten. Ggf. können als fehlerhaft erkannte Flaschen dann ausgeschieden werden. Dabei können z.B. die zwischen Blasmaschine und Etikettiermaschine vorhandenenTransfersterne zur Inspektion der gerade fertig geblasenen Flaschen und die der Etikettiermaschine nach geschalteten Transfersterne zur Inspektion des Etikettensitzes und des Etiketts selbst vorgesehen sein.

In vorteilhafter Weise wird die gesamte Vorrichtung mit den einzelnen Maschinen und Transfersternen so ausgelegt, dass sich eine durchgehende, insbesondere gleichbleibende Neckhandlingsebene auch für verschiedene Flaschengrößen bzw. -höhen ergibt. In weiterer vorteilhafter Ausgestaltung der Erfindung ist vorgesehen, dass die Übergabe und der Transfer aus der Blasmaschine unter Beibehaltung der Ausrichtung in der Entnahmeposition der Flaschen aus der Blasform bis zur Etikettiermaschine zum stellungsgerechten Etikettieren stattfindet. Durch diese Maßnahme wird ein Ausrichtvorgang der Flaschen zum stellungsgerechten Einlauf in die Etikettiermaschine vereinfacht oder kann ganz entfallen und es müssen keine zusätzlichen Ausrichtwege zur Verfügung gestellt werden, was wiederum die Förderstrecke verkürzt.

In weiterer vorteilhafter Ausgestaltung der Erfindung ist vorgesehen, dass die Transfersterne als einzelne Module mit eigenem Antrieb und Standardschnittstelle ausgebildet werden. Die Transfersterne bilden damit Schnittstellen zu den vor- bzw. nach geschalteten Maschinen und können aufgrund ihrer Einzelantriebe (z. B. Servomotoren, mechanische Kupplung mit Entkupplungsfunktion oder dergleichen) die Maschinen voneinander abkoppeln. So kann beispielsweise bei Stillsetzen eines Transfersterns zwischen der Blasmaschine und der Etikettiermaschine eine Abkopplung zwischen Blas- und Etikettiermaschine stattfinden, was z. B. zur Beseitigung einer Störung vorteilhaft ist. Es wird so ermöglicht, dass z. B. noch funktionsfähige Maschinen leer gefahren werden können, während beispielsweise die vorgeschalteten angehalten werden. So kann bevorzugt die Blasmaschine bei angehaltener Etikettiermaschine noch leer gefahren, z.B. durch Flaschenauswurf. Auch ermöglicht diese Lösung eine Tippfunktion zur Störbeseitigung ohne die vor- bzw. nach geschaltete Maschine laufen lassen zu müssen. Auch im Falle der Umrüstung ist das Betreiben der einzelnen Maschinen unabhängig von den anderen von Vorteil. Schließlich ergibt sich durch die Möglichkeit der Entkopplung der Maschinen auch eine Verbesserung beim Personenschutz, weil sich die Transfersterne zwischen angrenzenden Maschinen dann stilllegen lassen, so dass die Quetsch- oder Einzugsgefahr verringert wird.

Die Transfersterne bilden nicht nur die mechanische Schnittstelle zu den Maschinen (Modulen), sondern auch im übertragenen Sinn die Schnittstellen zu der Automatisierungs- bzw. Steuerungstechnik. Durch Wahl der Anzahl und Anordnung der Transfersterne kann auch die Position bzw. die Winkelstellung der einzelnen Maschinen und der Abstand zueinander weiter bestimmt werden. Auch kann die Laufrichtung entsprechend beeinflusst werden, abhängig von der Anzahl der Transfersterne.

In weiterer vorteilhafter Ausgestaltung der Erfindung ist die Etikettiermaschine als Modulmaschine mit Wechselaggregaten zum Etikettieren, Drucken, Ausrichten und/oder Inspizieren ausgebildet. Wenn die Etikettiermaschine derart ausgebildet ist, erhöht sich die variable Einsatzfähigkeit der gesamten Vorrichtung, weil sich dann an der Etikettiermaschine durch einfaches Wechseln der Etikettieraggregate unterschiedliche Etikettieraufgaben einfach umsetzen lassen.

Wenn die weitere Behandlungsmaschine eine Füller-/Verschließer Kombination ist, die über wenigstens zwei Transfersterne mit der Etikettiermaschine verblockt ist, ergeben sich die bereits erwähnten Vorteile auch zwischen Behandlungsmaschine und Füller-/Verschließer Kombination.

Es liegen kurze Wege vor bei trotzdem möglicher unabhängiger Stillsetzung der einzelnen Maschinen.

In weiterer Ausgestaltung der Erfindung können sich an die Füller-/Verschließer Kombination noch weitere Behandlungsmaschinen anschließen, z. B. ein gesteuerter Verteilstern mit dem die auf Abstand getrennt aus der Füller-/Verschließer Kombination auslaufenden Flaschen an eine mehrspurige Verpackungsmaschine übergeben werden können. Derartige Verteilsterne sind an sich bekannt, z. B. aus der DE OS 10 2006 023 531 auf die hierzu inhaltlich Bezug genommen wird. Wenn ein derartiger Verteilstern mit der Füller-/Verschließer Kombination verblockt ist, ergibt sich eine raumsparende Möglichkeit, die in einer Reihe auf Abstand ankommenden Flaschen an eine mehrspurige Verpackungsmaschine zu übergeben, ohne dass währenddessen ein gegenseitiges Berühren der Flaschen stattfindet, d.h. die positive Flaschenhandhabung wird ununterbrochen beibehalten Raumgreifende Verdrängungsstrecken werden auf diese Weise vermieden. Es ist denkbar, das Neckhandling von Flaschen bis in eine ebenfalls für Neckhandlingtransport ausgelegte Verpackungsmaschine hinein beizubehalten und ggf. gleich eine der Maschinenteilung entsprechende Teilung von Gebindegruppen bei der Übergabe zu erzeugen. Damit bildet auch die Verpackungsmaschine einen Bestandteil einer synchron antreibbaren Gesamtblockanlage, die bevorzugt ohne Zwischenpufferung auskommen kann.

Wenn die Flaschenherstellung im Einstufenverfahren erfolgen soll, ist auch eine Blockung mit einer der Blasmaschine vorgeordneten Preformspritzmaschine möglich, die ebenfalls bevorzugt über Transfersternräder (ggf. mit Teilungsverzugsfunktion) erfolgen kann.

Die Erfindung wird im Folgenden anhand der in den Zeichnungen dargestellten Ausführungsbeispiele weiter erläutert und beschrieben. Dabei zeigt:
Fig. 1 eine schematischen Draufsicht auf eine erfindungsgemäße Vorrichtung nach einem ersten Ausführungsbeispiel,
Fig.2 eine schematische Draufsicht auf ein zweites Ausführungsbeispiel und
Fig.3 eine schematische Draufsicht auf ein drittes Ausführungsbeispiel einer erfindungsgemäßen Vorrichtung.

Die erfindungsgemäße Vorrichtung umfasst verschiedene Maschinen zur Herstellung, Etikettierung und in dem dargestellten Beispiel zum Füllen und Verschließen von Kunststoffflaschen. Im Einzelnen umfasst die dargestellte Vorrichtung in der Abfolge der einzelnen Behandlungsstufen eine Preformzuführung 60, eine Heizeinrichtung 50, die Blasmaschine 10, die Etikettiermaschine 20 und die Füller-/Verschließer Kombination 30, 40 sowie einen nach geschalteten, gesteuerten Verteilstern 46, der die am Abförderband 45 in Einzelreihe ankommenden Flaschen auf den mehrspurigen Abförderer 53 übergibt. Der Abförderer 53 kann bereits Bestandteil einer nachfolgenden Verpackungsmaschine 54 sein, die beispielsweise zum gruppenweisen Verpacken von Flaschengebinden in Schrumpffolie und/oder einen Kartonzuschnitt ausgebildet ist. Die Verpackungsmaschine kann beispielsweise entsprechend DE 42 07 725 A1 und/oder DE 44 41 700 A1 ausgebildet sein, d.h. bevorzugt mit Halsführungen zum wenigstens abschnittsweise hängenden Transport von Flaschen. Es sind aber auch herkömmliche Verpackungsmaschinen mit bodengestütztem Flaschentransport über Förderbänder einsetzbar.

Wie die Figur erkennen lässt, sind die einzelnen Maschinen mit kurzen Abständen eng miteinander verbunden bzw. verblockt und nur durch zwischengeschaltete Transfersterne voneinander getrennt. Im einzelnen durchlaufen die Preforms/Flaschen die nachfolgend beschriebene Stationen wie folgt:
Zunächst werden die Preforms in der Preformvereinzelungsmaschine 60 vereinzelt und über eine Zuförderstrecke 61 dem Heizmodul 50 zugeführt. Sie durchlaufen dort die Heiz- bzw. Konditionierstrecke mit Heizeinrichtungen 51 und werden dabei auf die für das Blasformen notwendige Temperatur gebracht. Die Heizeinrichtung ist direkt an die Blasmaschine 10 angeblockt und übergibt die Vorformlinge über den Einlaufstern 11 in das Blaskarussell 13. Von dort gelangen die dann zu Flaschen aufgeblasenen Kunststoffbehälter über den Auslaufstern 12 an die zwei Transfersterne 21 und 22, die zwischen Blasmaschine 11 und Etikettiermaschine 20 zwischengeschaltet sind.

In diesen Transfersternen können die Flaschen gegebenenfalls auf eine eventuell in der Etikettiermaschine andere Teilung gebracht und auch gegebenenfalls bereits inspiziert und/oder umfänglich nach einem bestimmten Merkmal zum Etikettieren ausgerichtet werden, um fehlerhafte Flaschen zu erkennen und/oder auszusortieren. Die Transfersterne haben nicht näher gezeigte eigene Antriebe und können so den Flaschenstrom zwischen Blasmaschine 10 und Etikettiermaschine 20 unterbrechen.

Die dargestellte Etikettiermaschine umfasst den Einlaufstern 23, das Etikettierkarussell 24 sowie das Auslaufrad 26. An das Karussell 24 ist ein Etikettieraggregat 25 angestellt. In diesem Bereich werden die durchlaufenden Flaschen etikettiert und/oder bedruckt (ggf. auch die Etiketten selbst) Die Etiketten können vorgeschnitten aus einem Behälter entnommen, oder von einem Etikettenband durch Abtrennen hergestellt werden. Es können aber auch Selbstklebeetiketten oder Schlauchetiketten (Sleeves) verarbeitet werden, wobei die Schlauchetiketten Stretch- oder Schrumpfetiketten sein können. Bei konventionellen Etiketten besteht ebenfalls die Möglichkeit, schrumpffähiges Folienmaterial zu verarbeiten, das sich nach herkömmlichem Aufwickeln auf eine Flasche, beispielsweise in Verbindung mit einer Anfangs- und Endbeleimung, durch Wärmebehandlung an die Flaschenkontur anlegen lässt. Es sind auch kombinierte Ausstattungsvarianten denkbar. Im Etikettierkarussell kann bevorzugt eine Bodenabstützung durch ein konturangepasstes Bodenstück erfolgen, um ein Ausstülpen des noch weichen und während dem Etikettieren durch Innendruckbeaufschlagung belasteten Flaschenbodens zu vermeiden, wobei günstigerweise zugleich eine Abkühlung und Verfestigung des Bodens herbeiführbar ist.

Der Auslaufstern 26 der Etikettiermaschine übergibt die Flaschen dann wiederum an zwei Transfersterne 31 und 32, an denen wiederum eine Inspektion und/oder ein Teilungsverzug durchgeführt werden kann. Vorzugsweise wird im Bereich dieser Transfersterne untersucht, ob die Etiketten richtig sitzen bzw. beschädigungsfrei sind und gegebenenfalls wird eine neue Teilung, wie sie für die nachfolgende Füllmaschine erforderlich ist, bewirkt.

Der Transferstern 32 übergibt die Flaschen dann an den Einlaufstern 33 der Füllmaschine 30, in der die Flaschen gefüllt werden. Über den Auslaufstern 34 gelangen die Flaschen dann in den Verschließer 40, von wo sie auf die Abförderstrecke 50 weiter transportiert werden. Die dort im Abstand der Teilung des Verschließers 40 ankommenden Flaschen können dann z.B. von einem gesteuerten Greifstern 46 vom Abförderband 45 entnommen und an einen mehrspurigen Abförderer 53 übergeben werden. Diese Abförderer können beispielsweise in nicht näher dargestellter Weise Ketten oder Riemen mit Greifern zum hängenden und ggf. völlig bodenfreien Transportieren der Flaschen sein.

Dadurch, dass die Blasmaschine mit der Etikettiermaschine und der Füller-/Verschließerkombination 30, 40 über lediglich einige Transfersterne verblockt ist, ergibt sich insgesamt ein sehr kompakter Aufbau bei trotzdem erhöhter Flexibilität, weil an den durch die Transfersterne 21,22 bzw. 31,32 gebildeten funktionalen Trennstellen eine Entkopplung zwischen den Maschinen sowohl im Betrieb als auch zu Wartungszwecken stattfinden kann.

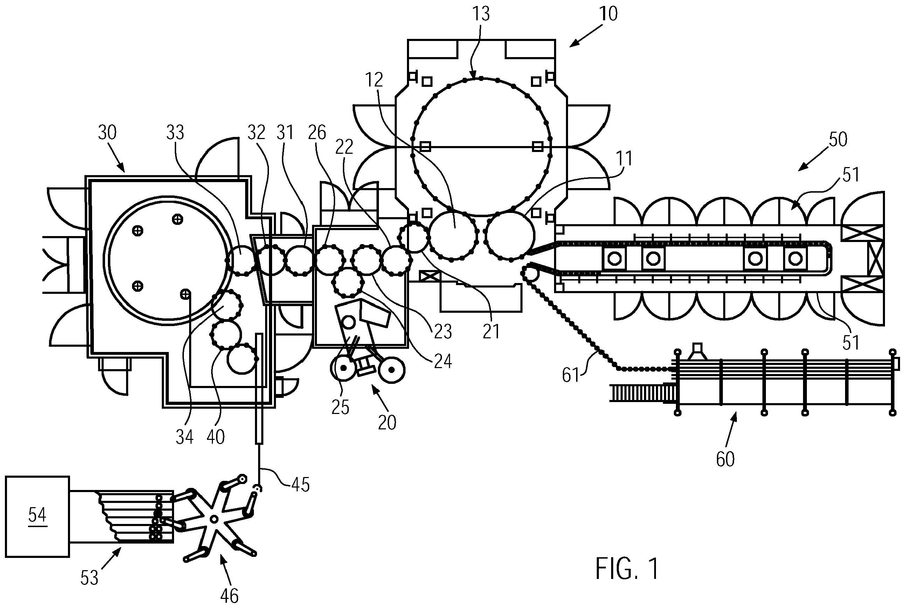

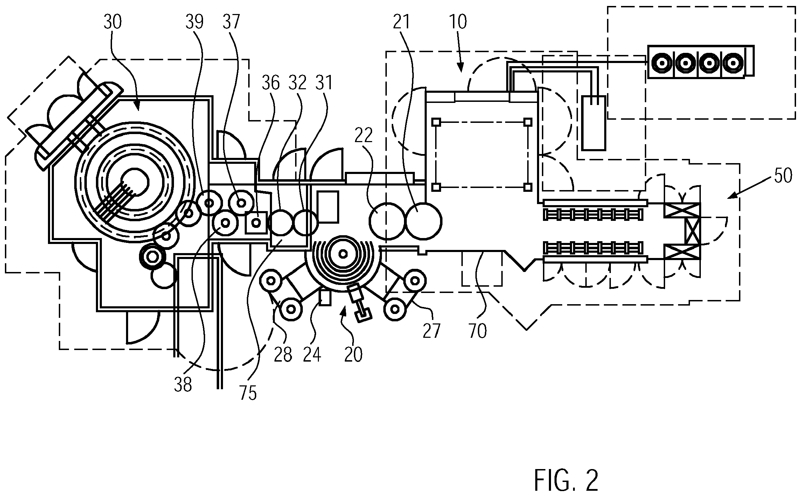

Bei der in Fig. 2 dargestellten Variante sind die grundsätzlichen Komponenten und der grundsätzliche Aufbau gleich wie bei der in Fig. 1 dargestellten Variante. Deshalb werden auch dieselben Bezugszeichen verwendet. Nicht dargestellt ist hier die Preformzuführung 60. Das Heizmodul 50 ist geringfügig unterschiedlich aufgebaut, ohne dass sich dadurch in der Funktion Unterschiede ergeben.

Die Etikettiermaschine 20 ist als modulare Maschine ausgebildet, bei der an der Peripherie des Karussells 24 freistehende Aggregate 27 und 28 in bestimmten Positionen angedockt sind. Diese Aggregate 27 und 28 können verändert bzw. einfach ausgetauscht und durch andere Aggregate ersetzt werden, so dass sich unterschiedlichste Etikettieraufgaben einfach durchführen lassen. Den Aggregaten können nicht näher gezeigte, ggf. vollautomatisch anspleißende Vorratsstationen mit mehreren Etikettenvorratsrollen zugeordnet sein, um einen möglichst unterbrechungsfreien Etikettierbetrieb sicher zu stellen.

Im weiteren Unterschied zu der in Fig. 1 dargestellten Variante sind zwischen den beiden Transfersternen 31 und 32 vier weitere Transfersterne 36 bis 39 angeordnet. Im Bereich dieser Transfersterne findet eine aktive Kühlung insbesondere der Böden der üblicherweise noch warmen, erst kurz vorher die Blasmaschine verlassenden Flaschen statt, was sicherstellt, dass die Flaschen vor dem Einlauf in die Füllmaschine ausreichend abgekühlt und damit stabil sind. Dies ist besonders wichtig, wenn im Füller COz-haltige Getränke unter Druck abgefüllt werden. Bei warmen Flaschenböden könnte es dann zu Beschädigungen im Bodenbereich und Bodenablösungen beim Vorspannen kommen, wenn die Flaschen noch zu warm und instabil wären.

Im weiteren Unterschied zur in Fig. 1 dargestellten Variante ist um die gesamte Anlage ein Schutzgehäuse 70 angeordnet, das die Anlagenkomponenten so abschließt, dass gegebenenfalls sogar unterschiedliche Druck- und Atmosphärenbereiche sowie sogar fallweise unterschiedliche Reinraumklassen im Bereich Blasmaschine, Etikettieraggregat und/oder Füller erzeugt werden können, wenn beispielsweise eine sterile Verarbeitung/Umgebung erforderlich sein sollte. Insbesondere im Bereich der Transfersterne 31 und 32 findet bevorzugt eine Art Lufttrennung durch Anordnung einer entsprechenden Abdeckung 75 statt, so dass eventuell leimhaltige Umgebungsluft aus dem Bereich der Etikettiermaschine nicht in Richtung Füllmaschine durch diffundieren und auch aus dem Bereich der Füllmaschine keine feuchte Luft in der anderen Richtung entweichen kann. Diese Luftschleuse hilft den Füllerbereich von externen Verunreinigungen sauber zu halten.

Die Schutzummantelung 70 kann insgesamt so ausgebildet sein, dass ein richtiges Gehäuse entsteht, das die gesamte Vorrichtung vollumfänglich umgibt und über nicht näher gezeigte Türen und Öffnungen dann die einzelnen Maschinen und Baugruppen zugänglich sind.

Durch die erfindungsgemäße Anordnung werden sehr kompakte, abgeschlossene und funktionsfähige Kompaktanlagen geschaffen, die wenig Raum bei hoher Flexibilität und modularer Baumöglichkeit zu verwirklichen erlauben.

Natürlich kann auch bei der in Fig. 2 dargestellten Variante an den Auslauf des Füllers ein geblockter, gesteuerter Verteilerstern angeordnet sein, der die in einer Reihe auslaufenden Flaschen auf eine(n) mehrbahnige(n) Abförderer/Verpackungsmaschine überträgt.

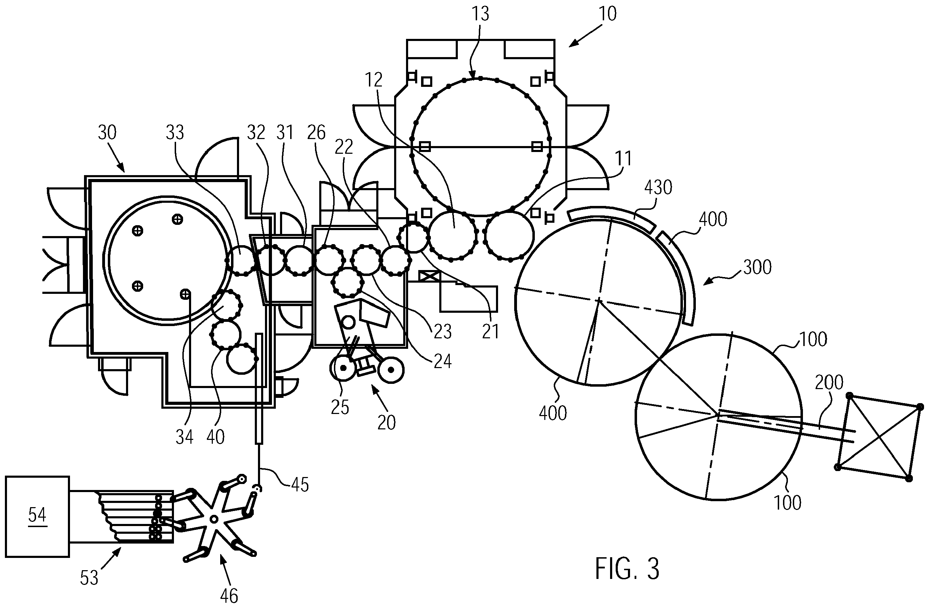

Fig. 3 zeigt eine Weiterbildung der in Fig. 1 gezeigten Ausführung mit einer im Einstufenverfahren arbeitenden Blasmaschine, d.h. unmittelbar vorgelagerter Herstellung der Preformen für Kunsstoffflaschen. Die einzelnen Komponenten der Vorrichtung V sind in Modulbauweise kompakt zueinander angeordnet, und umfassen einen Spritzrotor 100, der bevorzugt mit einem zumindest teilweise mitdrehenden Extruder 200 kombiniert ist und mit einer angrenzenden, hier als Konditionierkreis ausgebildeten Konditionierstrecke 300 zusammenwirkt, deren mehrere Kühl- und/oder Heizstationen 400 zugeordnet sind. Die Konditionierstrecke 300 kooperiert mit einem Transferstern 11, der seinerseits mit dem Blasrotor zum Streckblasen der Flaschen zusammenarbeitet. Am Spritzrotor 100 sind zum Beispiel im Umfangsbereich viele Spritzgießformen 100' angeordnet, In der Konditionierstrecke 300 sind Transferspreizdorne 400 als Transferelemente an beweglichen Armen eines Teilungsverzugssterns 430 vorgesehen. Der Transferstern 11 weist ebenfalls Transport- oder Transferelemente auf, die vom Spritzrotor 100 kommenden Preformen zu den Blasformen des Blasrotors 13 zu transferieren. Weitere Details einer geeigneten Einstufenmaschine sind dem Dokument WO 2009/049848 A2 entnehmbar, das ausdrücklich einbezogen wird.

## Patentansprüche

1. Vorrichtung zum Herstellen von Kunststoffflaschen mit einer Blasmaschine (10), einer Etikettiermaschine (20) und wenigstens einer weiteren Behandlungsmaschine (30, 40), wie Rinser, Sterilisator, Füller, Verschließer oder dergleichen, **dadurch gekennzeichnet, dass** zum Transport der Flaschen von Maschine (10; 20; 30) zu Maschine Transfersterne (21, 22; 31, 32) so angeordnet sind, dass die Flaschen ohne Puffer zwischen den wenigstens drei Maschinen transportiert werden.

2. Vorrichtung nach Anspruch 1, **dadurch gekennzeichnet, dass** zwischen Blasmaschine und Etikettiermaschine wenigstens zwei Transfersterne (21, 22) angeordnet sind, von denen wenigstens eines zum Teilungsverzug dient.

3. Vorrichtung nach Anspruch 2, **dadurch gekennzeichnet, dass** von den Transfersternen wenigstens einer für Inspektionsaufgaben und/oder zum Ausrichten von Flaschen vorgesehen ist.

4. Vorrichtung nach wenigstens einem der vorangegangenen Ansprüche, **dadurch gekennzeichnet, dass** die Maschinen (10, 20, 30) und die Transfersterne (21, 22; 31, 32) so angeordnet und ausgebildet sind, dass eine durchgehende, insbesondere gleichbleibende Neckhandlungsebene auch für verschiedene Flaschengrößen gebildet wird.

5. Vorrichtung nach wenigstens einem der vorangegangenen Ansprüche, **dadurch gekennzeichnet, dass** zur Übergabe zwischen den Maschinen bzw. Transfersternen aktive und/oder passive Klammern zum positiven Greifen und Übergeben der Flaschen vorgesehen sind.

6. Vorrichtung nach wenigstens einem der vorangegangenen Ansprüche, **dadurch gekennzeichnet, dass** die Übergabe und der Transfer aus der Blasmaschine unter Beibehaltung der Ausrichtung in der Entnahmeposition der Flaschen aus der Blasform bis zur Etikettiermaschine zum stellungsgerechten Etikettieren stattfindet.

7. Vorrichtung nach wenigstens einem der vorangegangenen Ansprüche, **dadurch gekennzeichnet, dass** die Transfersterne als einzelne Module mit eigenem Antrieb und Standardschnittstelle ausgebildet sind.

8. Vorrichtung nach wenigstens einem der vorangegangenen Ansprüche, **dadurch gekennzeichnet, dass** die Etikettiermaschine als Modulmaschine mit Wechselaggregaten (27, 28) zum Etikettieren, Drucken, Ausrichten und/oder Inspizieren ausgebildet ist.

9. Vorrichtung nach wenigstens einem der vorangegangenen Ansprüche, **dadurch gekennzeichnet, dass** die weitere Behandlungsmaschine eine Füllerverschließerkombination (30, 40) ist, die über wenigstens zwei Transfersterne (31, 32) mit der Etikettiermaschine verblockt ist.

10. Vorrichtung nach Anspruch 9, **dadurch gekennzeichnet, dass** mit dem Auslauf (45) der Füller/Verschließer Kombination (30, 40) ein gesteuerter Verteilstern (46) verblockt ist, der die auf Abstand auslaufenden Flaschen an eine mehrspurige Verpackungsmaschine (50) übergibt.

11. Vorrichtung nach wenigstens einem der vorangegangenen Ansprüche, **dadurch gekennzeichnet, dass** zwischen Etikettiermaschine und einer nach geschalteten Füllmaschine (30) eine Behälterbodenkühlung (36-39) zwischengeschaltet ist.

12. Vorrichtung nach einem der vorangegangenen Ansprüche, **dadurch gekennzeichnet, dass** die wenigstens drei Maschinen von miteinander verbundenen Gehäusen (70) umschlossen sind, die es erlauben, unterschiedliche Atmosphären und/oder Drücke im Bereich der einzelnen Maschinen zu verwirklichen.

13. Verfahren zum Herstellen von Kunststoffflaschen mit folgenden Schritten:
- Blasformen von Vorformlingen in einer Blasmaschine zu Kunststoffflaschen,
- Übergeben der Kunststoffflaschen mit Hilfe wenigstens eines Transfersterns an eine Etikettiermaschine,
- Etikettieren der Flaschen,
- Übergeben der etikettierten Flaschen mit Hilfe wenigstens eines Transfersterns an eine nachgeschaltete Behandlungsmaschine, wie Rinnser, Sterilisator, Füller, Verschließer oder dergleichen, wobei der Durchlauf der Flaschen von der Blasmaschine bis zur weiteren Behandlungsmaschine ohne Zwischenschaltung von Puffern in direktem Strom durchgeführt wird.
